# EUROPEAN PATENT APPLICATION

(11) **EP 2 988 404 A1**
(43) Date of publication of application: **24.02.2016**
(21) Application number: 14182008.4
(22) Date of filing: 22.08.2014
(51) Int. Cl.: H02M 1/36, H02M 7/483

(54) **Modular multilevel converter precharge**

(71) Applicant: ABB Technology AG, 8050 Zürich (CH)
(72) Inventor: Turner, Robert, 4122 Hasting (NZ); Klimczak, Pawel, 02-764 Warszawa (PL)
(74) Representative: ABB Patent Attorneys

(57) **Abstract**

The present invention is concerned with a cost-effective way of accelerating pre-charging of Modular Multilevel Converters (MMC), in particular with obtaining short total pre-charge times and moderate charging currents without costly investments in extra control components. A method of charging a MMC with a plurality of converter cells each including a cell capacitor and two power semiconductor switches controlled by, or operated through, an MMC controller comprises two stages. A first stage includes charging passively, from a main or auxiliary power source connected to the MMC via a simple, cost-effective, high-impedance, passive pre-charge circuit, and without MMC or dedicated external power semiconductor switches being operated, a cell capacitor of a converter cell of the MMC to a minimum cell or capacitor voltage required for operation of the power semiconductor switches of the cell. A subsequent second stage includes charging actively the cell capacitor from the same power source, by operating the power semiconductor switches through the MMC controller, to a nominal cell or capacitor voltage above the minimum voltage.

## Description

### FIELD OF THE INVENTION

The invention relates to the field of Modular Multilevel Converters in electric power systems, specifically to pre-charging of cell capacitors in such converters prior to operation.

### BACKGROUND OF THE INVENTION

A Modular Multilevel power Converter (MMC), also known as Chain-Link Converter (CLC), comprises a plurality of converter cells, or converter sub-modules, serially connected in converter branches that in turn may be arranged in a wye/star, delta, and/or indirect converter topology. Each converter cell comprises, in the form of a half-bridge or full-bridge circuit, a capacitor for storing energy and power semiconductor switches such as insulated gate bipolar transistor (IGBT) devices, gate-turn-off thyristor (GTO) devices, or MOSFETs for connecting the capacitor to the converter branch with one or two polarities. The voltage per converter cell capacitor may be between 1 kV and 3 kV; whereas the voltage of a converter branch may be in a range from 10 kV to several 100 kV. An MMC controller with a processor and corresponding software, or an FPGA, is responsible for controlling the converter cells and operating the power semiconductor switches by means of a pulse width modulation scheme.

MMCs may be used in electric power transmission systems as ac-only Static VAR Compensators (Statcoms) and/or Flexible AC Transmission Systems (FACTS) devices for static power-factor correction as well as for voltage quality and stability purposes. A Statcom provides reactive power support to an electric power transmission network or grid to which the Statcom is connected, by producing or absorbing reactive power.

An operating MMC has a certain amount of stored energy which must be provided to the converter before connecting the converter to the electric grid. To that purpose, charging, or pre-charging, of the converter cell capacitors is conventionally executed by way of passive charging or by using external charging controllers. Passive charging of the capacitors is performed slowly in order to limit inrush currents, and hence takes between ten seconds to several minutes to complete. Additionally, the charging voltage must be equal or larger to the grid voltage. External charging controllers on the other hand require additional control hardware and are expensive.

In order to avoid the medium voltage insulation requirements related to external power sourcing of the power semiconductor switches, the auxiliary energy required for operation of a semiconductor switch of an MMC cell is drawn from the cell capacitor. Accordingly, the power semiconductor switch remains inactive until an initial charging through the free-wheeling diodes of the cell leads to a certain minimum cell capacitor voltage. Once all cells have become active, the MMC may start switching operation and actively equalize the charges in the cell capacitors using known balancing methods. The patent US 8451636 discloses pre-charging, by means of external power electronics devices and low voltage AC power controllers providing an adjustable pre-charge current, the cell capacitors to a minimum voltage that is required for activating the semiconductors, and subsequent activation of the semiconductors such that the capacitors are charged further to nominal operating voltage.

### DESCRIPTION OF THE INVENTION

It is an objective of the invention to provide for a cost-effective way of accelerating a charging process of Modular Multilevel Converters. This objective is achieved by a method and a controller according to the independent claims. Preferred embodiments are evident from the dependent patent claims.

According to the invention, a method of charging a Modular Multilevel Converter (MMC) with a plurality of converter cells each including a cell capacitor and two power semiconductor switches controlled by, or operated through, an MMC controller comprises two stages. A first stage includes pre-charging passively, from a main or auxiliary power source connected to the MMC via a simple, cost-effective, high-impedance, passive pre-charge circuit, and without MMC or dedicated external power semiconductor switches being operated, a cell capacitor of a converter cell of the MMC to a minimum cell or capacitor voltage required for operation of the power semiconductor switches of the cell. A subsequent second stage includes charging actively the cell capacitor from the same power source, by operating the power semiconductor switches through the MMC controller, to a nominal cell or capacitor voltage above the minimum voltage.

A suitably dimensioned impedance of the pre-charge circuit including inductive and resistive components such as line inductance of a supply line and by-pass resistance in a charging unit determines total pre-charge time and maximum pre-charging current. Specifically, short total pre-charge times and moderate pre-charging currents become possible without costly investments in extra control components. The MMC may specifically be a Statcom for static power-factor correction, with converter cells being serially connected in converter branches that in turn are arranged in a wye/star or delta arrangement, and connected to a main AC grid via a single supply line.

In a preferred embodiment the method comprises, during stage two, measuring charging currents at all phases of the MMC, and implementing, or performing, a converter control as a voltage control based on the measured charging currents. Voltage control may include specifying a converter voltage reference by multiplying the measured current with a gain comparable to a pre-charge circuit impedance. In this case, a charging voltage at the MMC terminals is not needed to be known, which is specifically advantageous in the case of auxiliary power sourcing where the charging voltage is different to that of the grid and where both amplitude and phase of the charging voltage may be unknown.

In another preferred embodiment the method comprises charging the cell capacitor from an auxiliary power source connected via an auxiliary transformer to the MMC and providing a charging voltage to the MMC which is lower than a MMC rated voltage at the terminals of the nominally operating MMC. A suitably dimensioned generic auxiliary transformer may be used for pre-charging MMCs with different voltage and power ratings from auxiliary power sources with a range of auxiliary supply voltages. If a voltage supplied by the auxiliary power source exceeds the minimum voltage, the auxiliary transformer may also be omitted.

Advantageous variants of the invention are directed to preventing transformer magnetization of a main transformer connecting the MMC to the AC grid and providing for voltage transformation between the MMC rated voltage and a grid voltage. To that purpose, line disconnector switches arranged in a supply line between the main transformer and a connection point of a charging unit may be opened during both stages of the charging process. Alternatively, the terminals of the main transformer may be short-circuited by closing dedicated shorting switches, in which case an auxiliary power source is preferably connected to midpoints of converter branches of the MMC.

### BRIEF DESCRIPTION OF THE DRAWINGS

The subject matter of the invention will be explained in more detail in the following text with reference to preferred exemplary embodiments which are illustrated in the attached drawings, in which identical parts are provided with the same reference symbols in the figures:
- Fig.1: depicts an MMC Statcom connected in a transformer-less manner to an AC grid;
- Fig.2: depicts an MMC Statcom coupled to the AC grid by way of a main transformer;
- Fig.3: depicts an MMC Statcom with a charging unit including an auxiliary power source;
- Fig.4: depicts a common mode charging circuit for an MMC ac/ac frequency converter;
- Fig.5: depicts a charging topology for a delta-connected MMC Statcom;
- Fig.6: depicts a charging topology for a wye/star connected MMC Statcom;
- Fig.7: depicts a charging topology for an indirect MMC ac-dc converter; and
- Fig.8: depicts simulated voltage waveforms at the beginning of the charging process.

### DETAILED DESCRIPTION OF PREFERRED EMBODIMENTS

According to the invention, pre-charging of a Modular Multilevel power Converter (MMC) includes a first stage of passive pre-charging through a charging unit. During this first stage, while the process is being monitored by suitable controllers, no active control and operation of any, MMC or charging unit, power electronic switches is taking place. Accordingly, all MMC cells are pre-charged at the same time, and there is no sequential selection of groups of cells. The first stage is terminated as soon as a minimum voltage of, for instance, 25% of a nominal cell capacitor voltage in the cell capacitors is reached and observed by the monitoring controller. Specifics of the first stage are described next, with details relating to the second stage following towards the end of this specification.

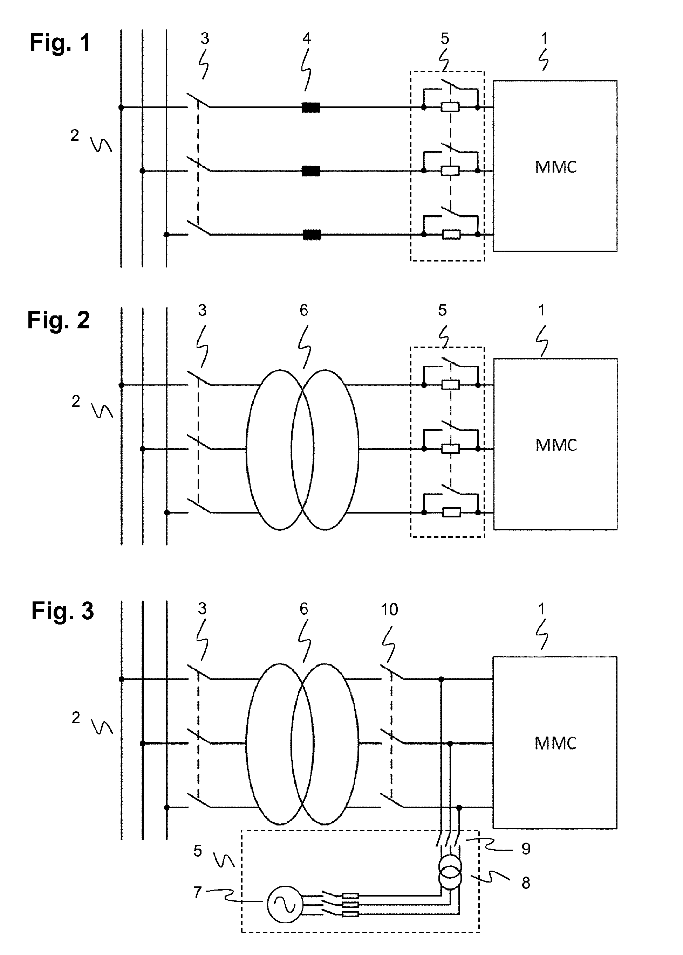

Fig.1 depicts an MMC Statcom 1 connected to a three phase AC power grid 2 in a direct, transformer-less manner, i.e. without intervening main transformer. A main circuit breaker, or converter feeder breaker, 3 connects the AC grid 2 to a supply line with a series line inductance 4 and a charging unit 5 leading to the terminals of the Statcom. The charging unit includes a bypass switch and a charging resistor that together with the line inductance forms a charging circuit impedance for passive pre-charging of the Statcom from the AC grid as charging power source. Fig.2 depicts a Statcom 1 coupled to the AC grid 2 by way of a main transformer 6 arranged between the main breaker 3 and the charging unit 5. The main transformer provides for voltage transformation between the MMC rated voltage of, for instance, 6 kV or 13 kV, to a medium voltage of the AC grid of, for instance, 36 kV. The inductance of the main transformer is part of the charging circuit impedance during passive pre-charge. Fig.3 depicts a transformer-coupled Statcom 1 with a charging unit 5 including an auxiliary power source 7, a dedicated auxiliary or charging transformer 8 to which the source 7 is connectable, and a charging switch 9 that in turn may be connected to the supply line. The charging transformer represents a separate charging inductance for passive pre-charging of the Statcom from the auxiliary power source as charging power source. A line disconnector or medium voltage contactor 10 is provided in the supply line between the main transformer 6 and a connection point of the charging unit in order to allow disconnecting the main transformer during charging.

In the foregoing embodiments, the charging circuit and charging unit are connected to ac terminals of the MMC, and hence may be used with all converter topologies. Any number of charging phases can be connected to any sets of converter AC terminals. To obtain even charging of the converter, the charging arrangement should be symmetric, such as three charging phases each connected to a respective AC terminal. Alternatively, a charging circuit may connect to converter DC terminals, and/or a neutral point as exemplified in the common mode charging described next.

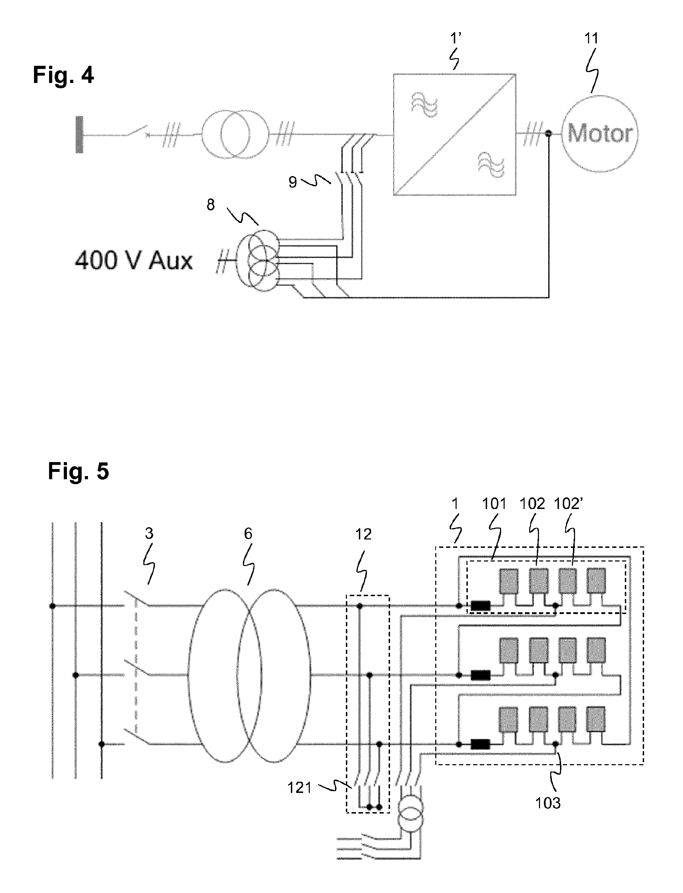

Fig.4 depicts a common mode charging circuit for an exemplary MMC ac/ac frequency converter 1' driving a motor load 11. The secondary side of the auxiliary transformer 8 is coupled to the supply line and to the common mode on the motor side of the converter. Common mode charging is also possible with ac-only MMC Statcoms with the exception of delta-connected Statcoms devoid of a neutral point. In the foregoing embodiments, the voltage of the auxiliary power source may be as low as 400 V, while the voltage provided by the step-up auxiliary transformer may be of a few kV and thus distinctly below the MMC rated voltage.

In the passive pre-charging from the AC grid in the embodiment of Fig.2, a transformer inrush current of the main transformer needs to be limited in order to prevent saturation of the transformer core and corresponding inductance drop. The same applies for the auxiliary transformer during passive pre-charging from the auxiliary power source in Fig.3. In general, charging currents are limited by a charging circuit impedance depending on any series inductance and resistance such as line inductance, transformer leakage inductance, and dedicated charging resistance, arranged in the charging circuit between charging power source and cell capacitors. In addition to the supply line or charging unit, inductive or resistive elements may be located in the converter cells or branches, or in a DC link of indirect converters.

The line disconnector in the embodiment of Fig.3 may be omitted in case the auxiliary power source is powerful enough to magnetize the main transformer at the same time, i.e. in case a no-load current of the main transformer does not exceed a nominal current of the auxiliary transformer, which is more likely in high-power installations (>10 MVA). Instead of the line disconnector, an MV side star point connection may be foreseen as depicted in Figs.5 to 7 below. In this case, the main transformer is disconnected from the AC grid during pre-charge by means of a main circuit breaker, but the main transformer is not disconnected from the MMC. In order to avoid magnetization of the main transformer during charging, the transformer terminals on MMC side are short-circuited using dedicated shorting switches or contactors. Short-circuiting the main transformer is particularly interesting for Statcoms with an integrated transformer, where the main transformer is part of the lineup and/or arranged inside the same enclosure as the MMC, and where line disconnectors between the main transformer and the converter are optional.

Fig.5 depicts an exemplary charging topology for a delta-connected MMC Statcom 1. Instead of the line disconnector of Fig.3, an MV side star point connection 12 including medium voltage, low current contactors 121 is provided. The latter serve to short the transformer terminals on Statcom side to avoid magnetization of the transformer during charging. Short-circuiting transformer terminals and Statcom terminals impacts the charging circuit topology. Therefore, the charging unit including auxiliary power supply and auxiliary transformer is connected, rather than to the shorted Statcom terminals, to a midpoint 103 of each of the converter branches 101, between two neighboring converter cells 102, 102'. In order to keep structural modification of the MMC to a minimum, optional additional pre-charge resistors may be arranged at a branch end rather than at a branch midpoint or in-between neighboring converter cells. The contactors used to short the main transformer terminals may also be moved to the grid side of the main transformer. This may be useful if the main breaker is integrated with grounding switches that may be used instead of dedicated shorting switches.

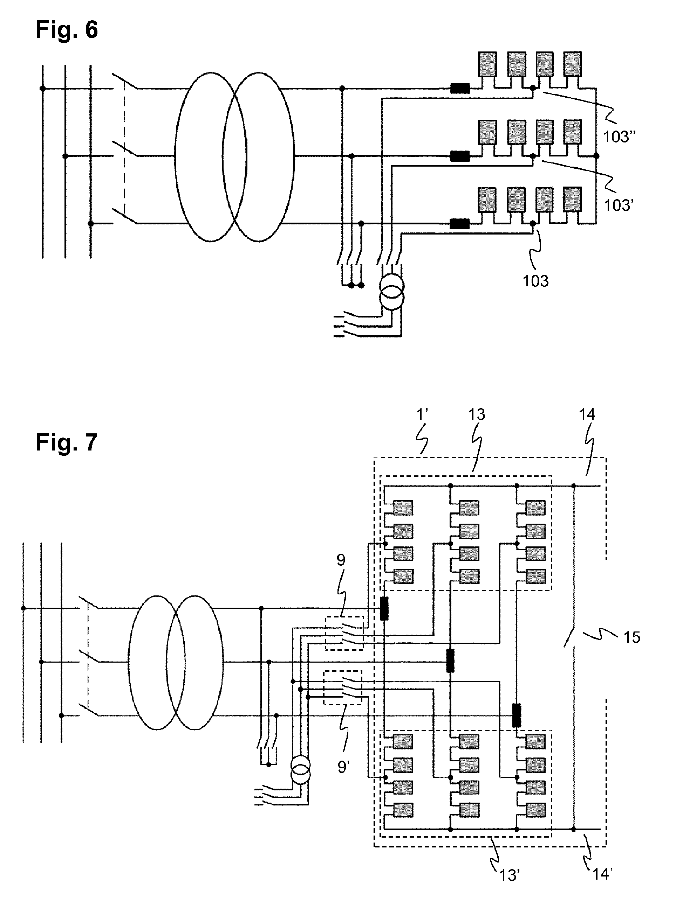

Fig.6 depicts a corresponding charging topology for a wye-connected, or star-connected, MMC Statcom 1. Again the charging unit is connected to three branch midpoints 103, 103', 103" of three respective converter branches.

Fig.7 depicts an indirect MMC ac-dc converter 1' topology with top and bottom branches forming two parallel wye circuits 13, 13'. A neutral point of each wye circuit is connected to a respective dc terminal 14, 14'. For passive charging of these circuits, two sets of charging switches 9, 9' are provided. A contactor 15 is provided for short-circuiting the two dc terminals 14, 14' of the MMC. Alternatively, existing grounding switches of the MMC converter may be considered for short-circuiting the dc side of the converter. This solution is likewise applicable to indirect MMC ac-ac converters where the two terminals 14, 14' are two-phase ac terminals, or to any other application where an indirect converter is used and where no voltage is allowed on ac and dc side during charging.

The charging unit including auxiliary transformer or series inductor/resistor remain part of the charging circuit during the second charging stage. In other words, charging power for stage two is supplied by the same power source as in stage one, and there are no switches in the charging circuit being operated at the transition from stage one to stage two. Only when stage two is terminated the charging unit is decoupled from the MMC by a charging switch or bypass switch and normal MMC operation starts.

The second, actively controlled pre-charge stage makes use of the converter cells to switch so as to complete pre-charging. The cells start switching and are controlled in a manner that further boosts their respective cell voltages. The control algorithm operates the converter as either a current controller or voltage controller, depending on the sensing available. If current sensing is available from the phases of the MMC, the stage two converter control is implemented as a voltage controller. Hence, and despite the MMC converter being a Voltage Source Converter VSC, by measuring the current a current sourcing system is created that produces, based on the measured line currents, a varying modulation index.

For the voltage controller the voltage reference is the measured current transformed by a controller Z, or controller function, denoted Z(I). If Z is chosen as a simple gain, also called "effective resistance" or "effective inverse admittance", then the converter acts like a resistor. Converter voltage reference is the measured current multiplied by the gain, such that the converter draws power that further boosts, or increases, cell voltage. Combined with the pre-charge circuit impedance, the converter acting as a resistor results in a current flow equivalent to that of an impedance divider. For example, if the pre-charge impedance is resistive, selecting Z to be equal to the pre-charge resistance results in perfect "impedance matching" causing maximum power flow into the converter.

Specifying Z as a gain does not require a voltage-based Phase-Locked-Loop PLL. Furthermore, the pre-charge power supply need not be perfectly balanced, such that the converter could be pre-charged from a two phase or even single-phase supply.

If pre-charge voltage sensing is available the converter is implemented as current controller, for which the current reference is the measured voltage transformed by a controller denoted Y or the inverse of Z. In case of current control, the converter current reference is voltage (representative of voltage at phases) multiplied by gain, also called "effective admittance" or "effective inverse resistance".

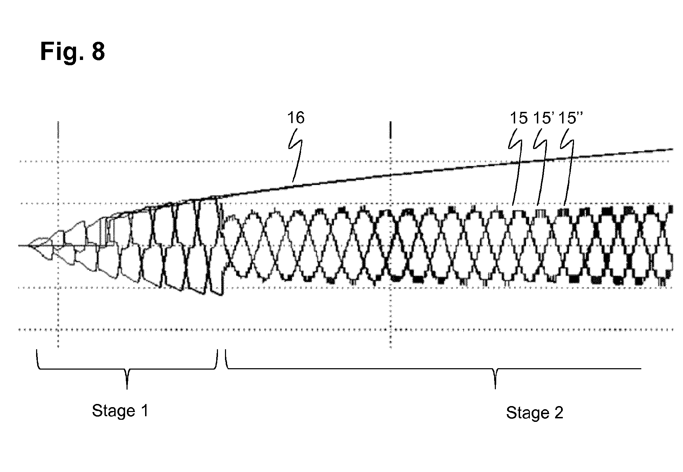

Fig.8 depicts simulated voltages at the MMC terminals (three AC waveforms 15) and a summed cell capacitor voltage 16 in a MMC branch or string at the beginning of the charging process. The passive pre-charge stage 1 current looks distorted because during this stage the free-wheeling diodes of the converter cells act as diode rectifiers and so have voltage waveforms typical of rectifier systems. All voltages increase concurrently to the minimum voltage (typically about 25% of the summed cell capacitor nominal voltage) towards the transition from stage 1 to stage 2. Accordingly, stage 2 is continued beyond the part shown in Fig.8 until the capacitors voltage have fully charged. The duration of stage 1 depends on the passive charging circuit impedance and the minimum voltage and may be anywhere from 80 milliseconds to several hundred milliseconds, while the second stage may take between two to four times as long as the passive stage.

While the invention has been described in detail in the drawings and foregoing description, such description is to be considered illustrative or exemplary and not restrictive. Variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

## Claims

1. A method of charging a Modular Multilevel Converter MMC (1) with a plurality of converter cells each including a cell capacitor and power semiconductor switches, comprising
- pre-charging passively, from a power source connected to the MMC via a pre-charge circuit, a cell capacitor of a converter cell of the MMC to a minimum voltage required for operation of the power semiconductor switches of the cell, followed by
- charging the cell capacitor, by operating the power semiconductor switches, to a nominal voltage above the minimum voltage.

2. The method of claim 1, comprising, when operating the power semiconductor switches,
- measuring a charging current at the MMC (1),
- implementing a converter control of the MMC as a voltage control based on the measured charging current.

3. The method of claim 1, comprising
- charging the cell capacitor from an auxiliary power source (7) connected via an auxiliary transformer (8) to the MMC (1), wherein the auxiliary transformer provides a charging voltage which is lower than an MMC rated voltage.

4. The method of claim 3, wherein the MMC (1) is connectable to the AC grid (2) through a main transformer (6) and a line disconnector switch (10), comprising
- opening, during charging of the cell capacitor, the line disconnector switch.

5. The method of claim 3, wherein the MMC (1) is connectable to the AC grid (2) through a main transformer (6), comprising
- short-circuiting, during charging of the cell capacitor, the main transformer (6) by closing a shorting switch (121).

6. The method of claim 5, wherein the converter cells (102) are serially connected in converter branches (101), comprising
- connecting the auxiliary power source (7) to midpoints (103) of the converter branches (101).

7. The method of any of claims 1 to 6, wherein the MMC is a Statcom for static power-factor correction.

8. An MMC controller for charging a Modular Multilevel Converter MMC (1) with a plurality of converter cells each including a cell capacitor and power semiconductor switches, configured to
- monitor, during a first charging stage comprising pre-charging passively, from a power source connected to the MMC via a pre-charge circuit, a cell capacitor of a converter cell of the MMC, a cell capacitor voltage, and, when the latter has reached a minimum voltage required for operation of the power semiconductor switches of the cell, to
- control, during a second charging stage, charging of the cell capacitor to a nominal voltage above the minimum voltage by actively operating the power semiconductor switches.
